# EUROPÄISCHE PATENTSCHRIFT

(11) **EP 1 796 867 B1**
(45) Veröffentlichungstag und Bekanntmachung des Hinweises auf die Patenterteilung: **21.05.2008**
(21) Anmeldenummer: 05772323.1
(22) Anmeldetag: 16.08.2005
(51) Int. Cl.: B23K 26/04, B23K 26/14

(54) **VERFAHREN ZUR ERMITTLUNG UND VERFAHREN ZUR EINSTELLUNG DER GEGENSEITIGEN LAGE DER ACHSE EINES LASERBEARBEITUNGSSTRAHLS UND DER ACHSE EINES PROZESSGASSTRAHLS AN EINER LASERBEARBEITUNGSMASCHINE SOWIE LASERBEARBEITUNGSMASCHINE MIT EINRICHTUNGEN ZUR UMSETZUNG DER VERFAHREN**
METHOD FOR DETERMINING AND METHOD FOR ADJUSTING THE MUTUAL POSITION OF THE AXIS OF A LASER MACHINING BEAM AND THE AXIS OF A PROCESS GAS BEAM ON A LASER MACHINING MACHINE AND LASER MACHINING MACHINE PROVIDED WITH DEVICES FOR CARRYING OUT SAID METHOD
PROCEDE PERMETTANT DE DETERMINER ET D'AJUSTER LA POSITION MUTUELLE DE L'AXE D'UN FAISCEAU DE TRAITEMENT AU LASER ET DE L'AXE D'UN FAISCEAU DE GAZ DE TRAVAIL DANS UNE MACHINE D'USINAGE AU LASER, ET MACHINE D'USINAGE AU LASER POURVUE DE DISPOSITIFS PERMETTANT LA MISE EN OEUVRE DUDIT PROCEDE

(30) Priorität: 04.09.2004 EP 04021074
(43) Veröffentlichungstag der Anmeldung: 20.06.2007
(73) Patentinhaber: TRUMPF Werkzeugmaschinen GmbH + Co. KG, 71254 Ditzingen (DE)
(72) Erfinder: HORN, Armin, 71272 Renningen (DE); HAMMANN, Gerhard, 70825 Korntal-Münchingen (DE)
(74) Vertreter: Kohler Schmid Möbus
(86) Internationale Anmeldenummer: PCT/EP2005/008852
(87) Internationale Veröffentlichungsnummer: WO 2006/027085

(56) Entgegenhaltungen:
- US-A- 4 427 873
- US-A- 5 463 202

## Beschreibung

Die Erfindung betrifft ein Verfahren zur Ermittlung sowie ein Verfahren zur Einstellung der gegenseitigen Lage einer Laserstrahlachse eines Laserbearbeitungsstrahls einerseits und einer Gasstrahlachse eines Prozessgasstrahls andererseits an einer Laserbearbeitungsmaschine zum Bearbeiten von Werkstücken. Dabei werden ein Achslagenerfassungsstrahl mit einer gegenüber der Gasstrahlachse definiert angeordneten Strahlachse und ein Achslagenerfassungselement relativ zueinander mit einer Achslagenerfassungsbewegung in Strahlachsquerrichtung bewegt. Mit der Achslagenerfassungsbewegung gekoppelt ist die Bewegung eines in definierter räumlicher Zuordnung zu der Strahlachse stehenden Referenzelementes für die Gasstrahlachse. Bei einer Abweichung der gegenseitigen Lage von Laserstrahlachse und Gasstrahlachse von einer gegenseitigen Solllage wird die Lageabweichung durch Verstellung der Lage der Laserstrahlachse und/oder durch Verstellung der Lage der Gasstrahlachse korrigiert.

Die Erfindung betrifft des Weiteren eine Laserbearbeitungsmaschine zum Bearbeiten von Werkstücken mit einem Laserbearbeitungskopf, von welchem aus ein Laserbearbeitungsstrahl mit einer Laserstrahlachse und ein Prozessgasstrahl mit einer Gasstrahlachse auf ein Werkstück richtbar sind sowie mit einer Einrichtung zur Ermittlung der gegenseitigen Lage der Laserstrahlachse einerseits und der Gasstrahlachse andererseits. Die Einrichtung zur Ermittlung der gegenseitigen Lage von Laserstrahlachse und Gasstrahlachse umfasst ein Achslagenerfassungselement, ein Referenzelement für die Gasstrahlachse sowie eine Auswerteeinrichtung. Ein Achslagenerfassungsstrahl mit einer gegenüber der Gasstrahlachse definiert angeordneten Strahlachse und das Achslagenerfassungselement sind relativ zueinander mit einer Achslagenerfassungsbewegung in Strahlachsquerrichtung bewegbar. Das Referenzelement für die Gasstrahlachse steht in definierter räumlicher Zuordnung zu der Strahlachse und ist mit der Achslagenerfassungsbewegung gekoppelt bewegbar.

Bei verschiedenen Arten der Laserbearbeitung von Werkstücken wird zusätzlich zu einem Laserbearbeitungsstrahl ein Prozessgasstrahl auf die Bearbeitungsstelle gerichtet. Beim Laserschneiden etwa kommen als Prozessgase Sauerstoff oder Inertgase, beispielsweise Stickstoff oder Argon, in Frage. Von den Schneidgasen ist Materialschmelze, die im Rahmen des Schneidprozesses gebildet wird, aus der Schnittfuge auszublasen. Bei Zufuhr von Sauerstoff als Schneidgas wird zudem der Schneidprozess durch Oxidationsvorgänge an der Bearbeitungsstelle unterstützt. In jedem Fall bedarf es einer zweckentsprechenden gegenseitigen Lage von Laserbearbeitungsstrahl und Prozessgasstrahl. Beim Laserschneiden werden optimale Bearbeitungsergebnisse dann erzielt, wenn die Laserstrahlachse des auf das betreffende Werkstück gerichteten Laserbearbeitungsstrahls und die Gasstrahlachse des auf das Werkstück gerichteten Schneidgasstrahls miteinander zusammenfallen. Aus den verschiedensten Gründen, beispielsweise infolge Verschmutzung der Laserdüse des Laserbearbeitungskopfes, bleibt eine einmal eingestellte gegenseitige Sollage von Laserstrahlachse und Gasstrahlachse bei Betrieb einer Laserbearbeitungsmaschine nicht zeitlich unbeschränkt erhalten. Im Interesse optimaler Bearbeitungsergebnisse ist daher die gegenseitige Lage von Laserstrahlachse und Gasstrahlachse zu überwachen und bei unerwünschter Abweichung von der gegenseitigen Solllage zu korrigieren.

Ein Verfahren und eine Vorrichtung der vorstehenden Art sind bekannt aus US 4,427,873 A , die als nächster stand der Technik gesehen wird. Im Falle des Standes der Technik wird zur Ermittlung und Einstellung der gegenseitigen Lage einer Laser-strahlachse eines Laserbearbeitungsstrahls und einer Gasstrahlachse eines Prozessgasstrahls zunächst der Laserbearbeitungskopf der vorbekannten Maschine zu einem Testwerkstück bewegt. Dann wird durch kurzzeitiges Einschalten des Laserbearbeitungsstrahls in das Testwerkstück eingestochen und ein kleines Loch in dem Testwerkstück erstellt. Bei ausgeschaltetem Laserbearbeitungsstrahl wird anschließend der aus einer Laserdüse des Laserbearbeitungskopfes austretende Prozessgasstrahl in Strahlquerrichtung über das Testwerkstück bewegt. Die Laserdüse wird dabei relativ zu dem ortsfesten Gehäuse des Laserbearbeitungskopfes verschoben und gegenüber dem Testwerkstück in diejenige Position überführt, bei welcher der aus der Laserdüse austretende Prozessgasstrahl das kleine Loch des Testwerkstücks durchsetzt und bei welcher der sich unterhalb des Testwerkstücks aufbauende Druck sein Maximum erreicht. Nimmt die Laserdüse die diesem Druckmaximum zugeordnete Position ein, so fallen die Laserstrahlachse des Laserbearbeitungsstrahls und die Gasstrahlachse des Prozessgasstrahls miteinander zusammen.

Eine Achslagenerfassungsbewegung in Strahlachsquerrichtung führt im Falle des Standes der Technik gemäß US 4,427,873 A lediglich die Gasstrahlachse des Prozessgasstrahls aus. Erzeugt wird diese Bewegung durch Verschiebung der Laserdüse gegenüber einem ortsfesten Gehäuse des Laserbearbeitungskopfes. Zur Verschiebung der Laserdüse dient ein eigens hierfür vorgesehener Verstellmechanismus. Die Laserdüse bildet ein Referenzelement für die Gasstrahlachse.

Ausweislich DE 43 36 136 A1 wird die Bearbeitungsstelle eines Laserbearbeitungsstrahls mittels einer Kamera durch die Düsenöffnung einer Laserdüse an einem Laserbearbeitungskopf hindurch erfasst. Durch Signalauswertung wird gegebenenfalls der Versatz der Bearbeitungsstelle und somit der Laserstrahlachse des Laserbearbeitungsstrahls gegenüber dem die Lage der Gasstrahlachse eines Prozessgasstrahls definierenden Zentrum der Düsenöffnung an der Laserdüse ermittelt. Der ermittelte Versatz von Laserstrahlachse und Gasstrahlachse bildet schließlich die Grundlage für eine Korrektur der gegenseitigen Lage der beiden Achsen.

Ein weiteres Verfahren zur Ermittlung der gegenseitigen Lage einer Laserstrahlachse eines Laserschneidstrahls an einer Laserschneidmaschine einerseits und einer Gasstrahlachse eines Schneidgasstrahls andererseits ist aus der betrieblichen Praxis als sogenanntes "Tapeshot-Verfahren" bekannt. In diesem Fall wird zunächst die Düsenöffnung einer Laserdüse an einem Laserschneidkopf mit einem Klebeband überklebt. Anschließend wird kurzfristig ein Laserschneidstrahl durch die Düsenöffnung hindurch gerichtet. Die gegenseitige Lage des Zentrums des von dem Laserschneidstrahl an dem Klebeband erstellten Loches einerseits und der Mitte der Laserdüse andererseits wird schließlich als gegenseitige Lage von Laserstrahlachse und Gasstrahlachse erfasst. Bei Abweichung von der gegenseitigen Solllage wird der Laserschneidstrahl bzw. der Schneidgasstrahl zur Beseitigung der Lageabweichung lagekorrigiert.

Eine auf die übliche Funktionalität von Laserbearbeitungsmaschinen abgestimmte Ermittlung und erforderlichenfalls eine entsprechende Einstellung der gegenseitigen Lage von Laserstrahlachse und Gasstrahlachse zu ermöglichen und eine Laserbearbeitungsmaschine bereitzustellen, an welcher eine derartige Lageermittlung bzw. Lageeinstellung realisierbar ist, hat sich die vorliegende Erfindung zum Ziel gesetzt.

Erfindungsgemäß gelöst wird diese Aufgabe durch die Verfahren gemäß den Patentansprüchen 1 und 10 sowie durch die Laserbearbeitungsmaschine gemäß Patentanspruch 11.

Demnach werden im Falle der Erfindung zur Ermittlung der gegenseitigen Lage der Laserstrahlachse eines Laserbearbeitungsstrahls und der Gasstrahlachse eines Prozessgasstrahls einerseits ein erster Achslagenerfassungsstrahl, dessen Strahlachse die Laserstrahlachse des Laserbearbeitungsstrahls repräsentiert und ein zweiter Achslagenerfassungsstrahl, dessen Strahlachse die Gasstrahlachse des Prozessgasstrahls repräsentiert und andererseits ein Achslagenerfassungselement in Strahl- bzw. Strahlachsquerrichtung relativ zueinander bewegt. Insofern werden erfindungsgemäß zur Achslagenermittlung Bewegungen ausgeführt, die ihrer Art nach auch im regulären Betrieb der Laserbearbeitungsmaschine - etwa zur Positionierung des Laserbearbeitungsstrahls gegenüber dem zu bearbeitenden Werkstück oder zur Werkstückbearbeitung - auszuführen sind. Folglich besteht inbesondere die Möglichkeit, für die Achslagenerfassungsbewegung des ersten Achslagenerfassungsstrahls sowie des zweiten Achslagenerfassungsstrahls einerseits und des Achslagenerfassungselementes andererseits auf Antriebe und Antriebs- bzw. Bewegungssteuerungen zurückzugreifen, die für den regulären Betrieb der Laserbearbeitungsmaschine ohnehin benötigt werden. Entsprechend kann das Referenzelement für die Laserstrahlachse und/oder das Referenzelement für die Gasstrahlachse und/oder das Referenzelement für das Achslagenerfassungselement gewählt werden. Auch insoweit gestattet das erfindungsgemäße Konzept die Integration der Funktion "Ermittlung der gegenseitigen Lage von Laserstrahlachse und Gasstrahlachse" in die übliche Funktionalität einer Laserbearbeitungsmaschine. Generell wird durch die Verwendung von Referenzelementen der genannten Art der Ort der Ermittlung der Relativlage von Laserstrahlachse und Gasstrahlachse in einen von den Achslagenerfassungsstrahlen bzw. von der Laserstrahlachse und der Gasstrahlachse abliegenden Bereich verlagert. Nicht zuletzt deshalb gestattet die Erfindung eine bedi enerfreundliche und gleichzeitig hochpräzise Ermittlung der gegenseitigen Lage von Laserstrahlachse und Gasstrahlachse.

Besondere Ausführungsarten der Verfahren nach den Patentansprüchen 1 und 10 ergeben sich aus den abhängigen Patentansprüchen 2 bis 9. Besondere Ausführungsarten der Laserbearbeitungsmaschine gemäß Patentanspruch 11 sind in den abhängigen Patentansprüchen 12 bis 21 beschrieben.

Ausweislich der Patentansprüche 2 und 12 dient in bevorzugter Ausgestaltung der Erfindung als erster Achslagenerfassungsstrahl ein Laserstrahl mit der Laserstrahlachse und/oder als zweiter Achslagenerfassungsstrahl ein Gasstrahl mit der Gasstrahlachse. Bei dem als erster Achslagenerfassungsstrahl genutzten Laserstrahl muss es sich nicht notwendigerweise um einen Laserbearbeitungsstrahl handeln, wie er im regulären Betrieb der Laserbearbeitungsmaschine auf das betreffende Werkstück gerichtet wird. Denkbar ist beispielsweise, zur Achslagenerfassung einen Laserstrahl mit geringer und für die reguläre Werkstückbearbeitung nicht ausreichender Strahlleistung zu verwenden. Entsprechend ist es nicht zwingend erforderlich, als Gasstrahl für die Achslagenerfassung einen Prozessgasstrahl zu nutzen. Beispielsweise aus Kostengründen kann es zweckmäßig sein, den Gasstrahl für die Achslagenerfassung nicht mit relativ teuerem Prozessgas sondern mit einem billigeren Gas, etwa mit atmophärischer Luft zu erzeugen. Für Achslagenerfassungsstrahlen, die möglichst weitgehend mit dem im regulären Maschinenbetrieb auf das zu bearbeitende Werkstück gerichteten Laserbearbeitungsstrahl sowie dem entsprechenden Prozessgasstrahl übereinstimmen, spricht der Umstand, dass dann die Ermittlung der Relativlage von Laserstrahlachse des Laserbearbeitungsstrahls und Gasstrahlachse des Prozessgasstrahls unter Bedingungen vorgenommen werden kann, welche den Bedingungen im regulären Maschinenbetrieb zumindest sehr nahe kommen und folglich Ergebnisse liefert, welche die Verhältnisse bei regulärem Maschinenbetrieb tatsächlich wiederspiegeln.

Die in den Patentansprüchen 3, 13 und 14 beschriebenen Maßnahmen sind im Interesse einer möglichst einfachen konstruktiven Umsetzung des erfindungsgemäßen Konzeptes vorgesehen. Dient der Bearbeitungskopf der Laserbearbeitungsmaschine als gemeinschaftliches Referenzelement für die Laserstrahlachse und die Gasstrahlachse, so kann zur Ermittlung der gegenseitigen Lage von Laserstrahlachse und Gasstrahlachse auf Einrichtungen zum Antrieb sowie zur Bewegungssteuerung des Bearbeitungskopfes zurückgegriffen werden, die auch im regulären Betrieb der Laserbearbeitungsmaschine genutzt werden.

Die Patentansprüche 4 und 15 betreffen die Umsetzung des erfindungsgemäßen Konzeptes in Fällen, in denen eine Kongruenz von Laserstrahlachse und Gasstrahlachse gefordert ist. Einen derartigen Anwendungsfall stellt das Laserschneiden dar.

In weiterer bevorzugter Ausgestaltung der Erfindung wird die gegenseitige Lage von Laserstrahlachse und Gasstrahlachse anhand derjenigen Positionen ermittelt, welche das Referenzelement für die Laserstrahlachse und das Referenzelement für die Gasstrahlachse bei erstmaligem Auftreffen der Strahlachsen der Achslagenerfassungsstrahlen auf das Achslagenerfassungselement einnehmen (Patentansprüche 5, 16). Mit dem erstmaligen Auftreffen der genannten Strahlachsen auf das Achslagenerfassungselement ist ein eindeutig definierter Zustand der Anordnung zur Achslagenerfassung als Auslöser für die Erfassung der Positionen des Referenzelementes für die Laserstrahlachse und des Referenzelementes für die Gasstrahlachse vorgesehen. Infolgedessen ist sichergestellt, dass Positionen des oder der Referenzelemente erfasst werden, die tatsächlich einen präzisen Rückschluss auf die Positionen von Laserstrahlachse und Gasstrahlachse bzw. auf deren Relativlage zulassen.

Ausweislich der Patentansprüche 6 bis 9 und 17 bis 20 werden im Falle der Erfindung praktikable und unter Rückgriff auf bereits verfügbare Einrichtungen realisierbare Möglichkeiten zur Definition bzw. Erfassung des erstmaligen Auftreffens der Strahlachsen der Achslagenerfassungsstrahlen auf das Achslagenerfassungselement gewählt. So ist etwa die Erfassung der Prozesslichtentwicklung an der werkstückseitigen Bearbeitungsstelle eines Laserbearbeitungsstrahls im regulären Maschinenbetrieb zur Steuerung und Überwachung des Einstechvorgangs an Werkstücken gebräuchlich. Abstandsmessungen sind beispielsweise im Schneidbetrieb einer Laserbearbeitungsmaschine üblich. Erfasst und überwacht wird dabei der Abstand zwischen Laserdüse und Werkstück zur Gewährleistung einer gleichbleibenden Lage des Laserstrahlfokus gegenüber dem Werkstück.

Patentanspruch 21 betrifft eine Laserbearbeitungsmaschine, an welcher sich das in Patentanspruch 10 beschriebene Verfahren zur automatisierten Einstellung der gegenseitigen Lage von Laserstrahlachse und Gasstrahlachse umsetzen lässt.

Nachfolgend wird die Erfindung anhand beispielhafter schematischer Darstellungen näher erläutert. Es zeigen:
- Fig. 1: eine Laserschneidmaschine bei der schneidenden Werkstückbearbeitung mittels eines Laserschneidstrahls sowie unter Aufgabe eines Schneidgasstrahls auf die Bearbeitungsstelle,

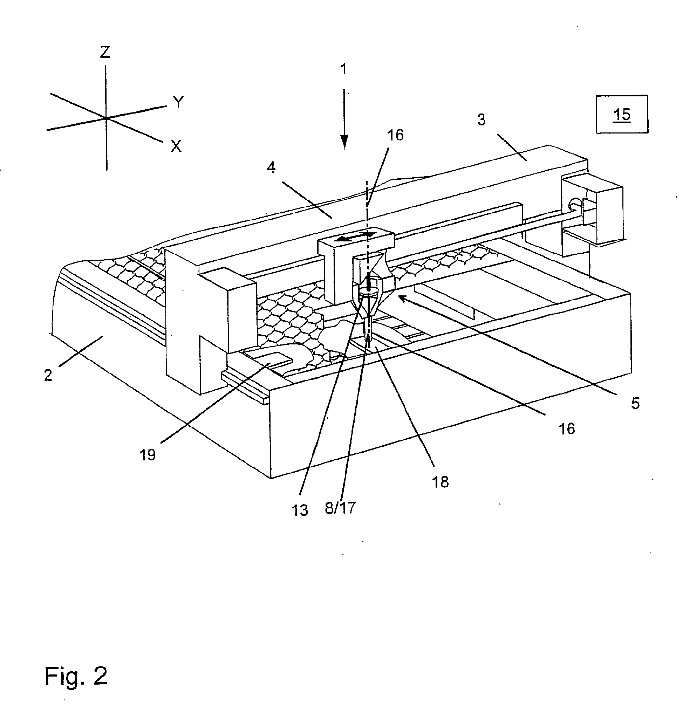

- Fig. 2: die Laserschneidmaschine nach Fig. 1 bei Ermittlung der gegenseitigen Lage der Laserstrahlachse des Laserschneidstrahls und der Gasstrahlachse des Schneidgasstrahls,
- Fig. 3: den Laserschneidkopf der Laserschneidmaschine nach den Fign. 1 und 2 im Längsschnitt und
- Fign. 4 bis 7: Darstellungen zum Ablauf der Ermittlung der gegenseitigen Lage der Laserstrahlachse des Laser-schneidstrahls und der Gasstrahlachse des Schneidgasstrahls.

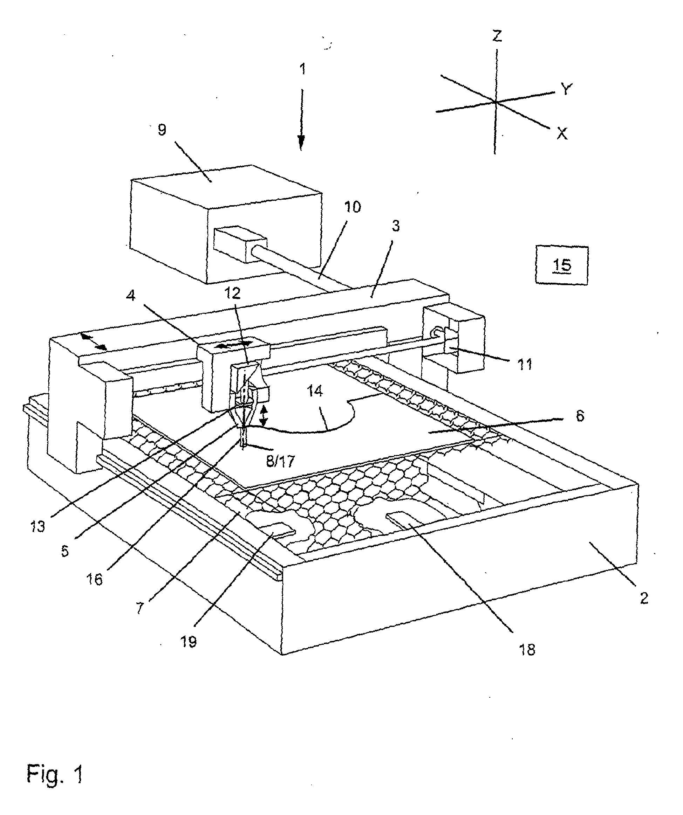

Ausweislich Fig. 1 besitzt eine als Laserschneidmaschine 1 ausgebildete Laserbearbeitungsmaschine ein Maschinenbett 2, an welchem eine Maschinenbrücke 3 in einer ersten Achsrichtung (X-Richtung) verfahrbar geführt ist. Die Maschinenbrücke 3 lagert ihrerseits an einem Querträger einen Führungsschlitten 4 mit einem aufgebrochen dargestellten Laserbearbeitungs- bzw. Laserschneidkopf 5. Gemeinschaftlich mit dem Führungsschlitten 4 ist der Laserschneidkopf 5 in einer zweiten Achsrichtung (Y-Richtung) an dem Querträger der Maschinenbrücke 3 entlang verfahrbar. Darüber hinaus ist der Laserschneidkopf 5 relativ zu dem Führungsschlitten 4 in einer dritten Achsrichtung (Z-Richtung) beweglich. Unterhalb des Laserschneidkopfs 5 ist ein Werkstück in Form eines Bleches 6 auf einer Werkstückauflage 7 gelagert.

Zur Bearbeitung des Bleches 6 dient ein Laserstrahl, der in den Abbildungen mit einer Laserstrahlachse 8 dargestellt ist. Der Laserstrahl wird von einer Laserstrahlquelle 9 erzeugt und durch ein Strahlführungsrohr 10 sowie über Umlenkspiegel 11, 12 zu einem im Innern des Laserschneidkopfs 5 angebrachten fokussierenden optischen Element 13 (Linse oder Spiegel) geführt. Das fokussierende optische Element 13 bündelt den Laserstrahl und richtet ihn als Laserschneidstrahl auf das Blech 6. Aufgrund der beschriebenen Verfahrbarkeit der Maschinenbrücke 3 sowie des Führungsschlittens 4 kann mit dem Laserschneidstrahl jeder beliebige Punkt an dem Blech 6 bearbeitet werden. Ein in dem gezeigten Beispielsfall an dem Blech 6 erstellter Schnitt 14 ist in Fig. 1 angedeutet. Die Beweglichkeit des Laserschneidkopfs 5 in Z-Richtung wird zur Einstellung der Fokuslage des Laserschneidstrahls in Blechquerrichtung genutzt.

Zum Verfahren des Laserschneidkopfs 5 in den drei Richtungen des Raumes dient ein motorischer Antrieb der Laserschneidmaschine 1, der mittels einer numerischen Steuerung 15 gesteuert wird. Auch die übrigen Funktionen der Laserschneidmaschine 1 sind steuerungsbezogen in die numerische Steuerung 15 integriert.

Gemeinschaftlich mit dem Laserschneidstrahl wird von dem Laserschneidkopf 5 aus ein Prozessgasstrahl in Form eines Schneidgasstrahls 16 auf das Blech 6 gerichtet. Das auf das Blech 6 aufgegebene Schneidgas, im dargestellten Fall Stickstoffgas, dient zum Ausblasen der an der blechseitigen Bearbeitungsstelle des Laserschneidstrahls gebildeten Metallschmelze aus der erstellten Schnittfuge. Idealerweise fallen die Laserstrahlachse 8 des Laserschneidstrahls und eine Gasstrahlachse 17 des Schneidgasstrahls 16 miteinander zusammen. Mit einer derartigen optimalen gegenseitigen Lage von Laserstrahlachse 8 und Gasstrahlachse 17 ist die Laserschneidmaschine 1 in Fig. 1 dargestellt.

Im laufenden Betrieb der Laserschneidmaschine 1 kann es zu einer Dejustage des Laserschneidstrahls 8 bzw. des Schneidgasstrahls 16 kommen. Zur Ermittlung einer etwaigen Abweichung der gegenseitigen Ist-Lage von Laserstrahlachse 8 und Gasstrahlachse 17 von der betreffenden Solllage dienen Achslagenerfassungselemente 18, 19, die an einem Längsende des Maschinenbettes 2 und somit am äußersten Rand des Arbeitsbereiches des Laserschneidkopfes 5 angebracht sind. Sowohl bei dem Achslagenerfassungselement 18 als auch bei dem Achslagenerfassungselement 19 handelt es sich um ein Federstahlplättchen. Das Achslagenerfassungselement 18 ist mit einer seiner in Y-Richtung verlaufenden, das Achslagenerfassungselement 19 mit einer seiner in X-Richtung verlaufenden Kanten an dem Maschinenbett 2 eingespannt. Im Übrigen kragen die Achslagenerfassungselemente 18, 19 jeweils frei von dem Maschinenbett 2 vor. Die sich an die eingespannte Kante des Achslagenerfassungselementes 18 unmittelbar anschließenden Kanten verlaufen in X-Richtung, die sich an die eingespannte Kante des Achslagenerfassungselementes 19 unmittelbar anschließenden Kanten verlaufen in Y-Richtung. Die Lage beider Achslagenerfassungselemente 18, 19 im X-Y-Z-Koordinatensystem der Laserschneidmaschine 1 ist definiert.

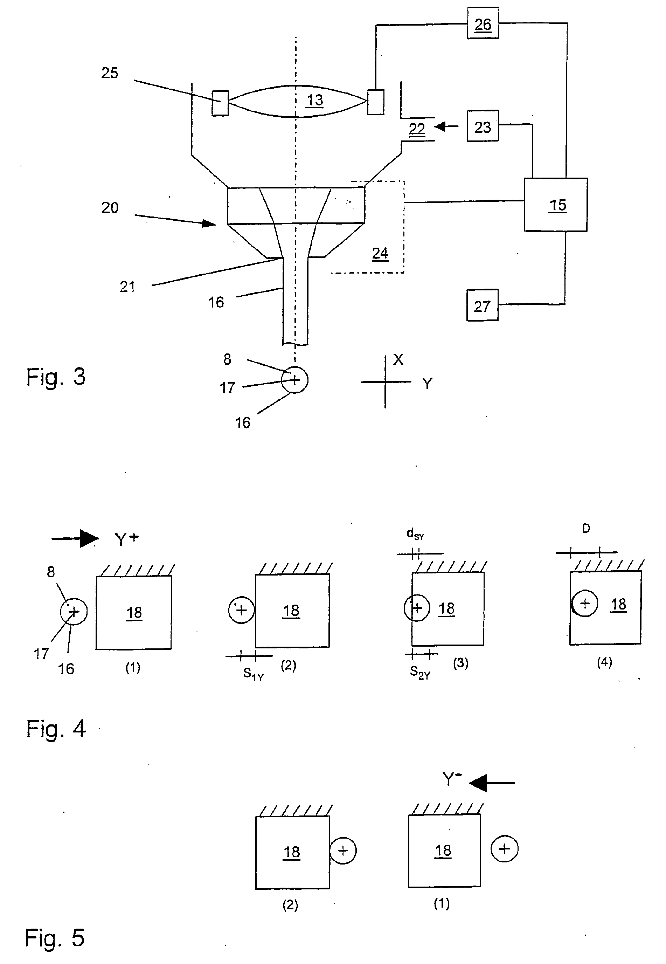

Mit einer gegenseitigen Fehleinstellung von Laserstrahlachse 8 und Gasstrahlachse 17 ist der Laserschneidkopf 5 in Fig. 3 dargestellt. In dieser Abbildung ebenfalls zu erkennen ist eine Laserdüse 20 des Laserschneidkopfs 5, durch welche hindurch der Laserschneidstrahl mit der Laserstrahlachse 8 und der Schneidgasstrahl 16 mit der Gasstrahlachse 17 auf das Blech 6 gerichtet werden. Zu diesem Zweck ist die Laserdüse 20 mit einer Düsenöffnung 21 (beispielsweise rund oder mit Ringspalt) versehen. Durch den Mittelpunkt der Düsenöffnung 21 verläuft die Gasstrahlachse 17. Das Schneidgas wird dem Laserschneidkopf 5 über eine Gaszufuhröffnung 22 von einer Schneidgasversorgung 23 zugeführt. Die Schneidgasversorgung 23 ist mittels der numerischen Steuerung 15 steuerbar.

Die Laserdüse 20 ist Teil einer herkömmlichen kapazitiven Abstandsmesseinrichtung 24. Messeinrichtungen dieser Art werden z.B. von der Firma TRUMPF, Ditzingen, Deutschland, unter der Bezeichnung "DIAS" vertrieben. Mittels der Abstandsmesseinrichtung 24 bestimmbar ist der Abstand zwischen der Unterseite der Laserdüse 20 und der Oberfläche eines der Laserdüse 20 gegenüberliegenden metallischen Werkstückes. Auch die Abstandsmesseinrichtung 24 steht mit der numerischen Steuerung 15 der Laserschneidmaschine 1 in Verbindung.

In Fig. 3 ebenfalls dargestellt ist eine Halterung 25 des fokussierenden optischen Elementes 13. Die Halterung 25 ist an dem Gehäuse des Laserschneidkopfs 5 in X- und Y-Richtung zustellbar gelagert. Etwaige Zustellbewegungen werden mittels eines Stellantriebes 26 ausgeführt, der seinerseits von der numerischen Steuerung 15 der Laserschneidmaschine 1 gesteuert wird.

Schließlich ist die Laserschneidmaschine 1 mit einer in Fig. 3 andeutungsweise gezeigten optischen Prozesslichtmesseinrichtung 27 versehen. Auch die Prozesslichtmesseinrichtung 27 ist herkömmlicher Bauart. Derartige Messeinrichtungen werden beispielsweise von der Firma TRUMPF, Ditzingen, Deutschland unter der Bezeichnung "PCS" vertrieben. Mittels der Prozesslichtmesseinrichtung 27 wird Prozesslicht, das an der blechseitigen Bearbeitungsstelle des Laserschneidstrahls entsteht, gemessen. Auch die Prozesslichtmesseinrichtung 27 steht mit der numerischen Steuerung 15 der Laserschneidmaschine 1 in Verbindung.

Die Vorgehensweise bei der Überprüfung der gegenseitigen Lage von Laserstrahlachse 8 und Gasstrahlachse 17 auf Bestehen einer Abweichung von der gegenseitigen Solllage wird anhand der Fign. 4 bis 7 erläutert. Die Düsenöffnung 21 besitzt hier einen kreisförmigen Querschnitt.

Gemäß Fig. 4 wird der Laserschneidkopf 5 als gemeinschaftliches Referenzelement für die Laserstrahlachse 8 und die Gasstrahlachse 17 mit der Laserdüse 20 in positiver Richtung der Y-Achse (Y⁺-Richtung) mit einer Achslagenerfassungsbewegung über das Achslagenerfassungselement 18 bewegt. Sobald dabei die Laserdüse 20 mit dem in Bewegungsrichtung vorauseilenden Teil des Randes der Düsenöffnung 21 über dem metallischen Achslagenerfassungselement 18 zu liegen kommt, wird begonnen, mittels der Abstandsmesseinrichtung 24 den Abstand zwischen der Laserdüse 20 und dem Achslagenerfassungselement 18 zu ermitteln. Die Schneidgasversorgung 23 ist eingeschaltet; ein Schneidgasstrahl 16 wird folglich von dem Laserschneidkopf 5 nach unten gerichtet und ist zunächst noch von dem Achslagenerfassungselement 18 beabstandet (Teildarstellung (1) von Fig. 4).

Im Laufe der Bewegung des Laserschneidkopfs 5 in Y⁺-Richtung erreicht der Schneidgasstrahl 16 das Achslagenerfassungselement 18 (Teildarstellung (2) von Fig. 4). Mit dem erstmaligen Auftreffen von Schneidgas auf das Achslagenerfassungselement 18 setzt dessen Auslenkung nach unten ein. Der Beginn der Auslenkung des Achslagenerfassungselementes 18 wird mittels der Abstandsmesseinrichtung 24 festgestellt und markiert einen Zeitpunkt, zu welchem die Position des Laserschneidkopfs 5 in Y⁺-Richtung erfasst wird. Unter der Prämisse, dass der Querschnitt des Schneidgasstrahls 16 in idealer Weise dem kreisförmigen Querschnitt der Düsenöffnung 21 an der Laserdüse 20 entspricht und unter der Prämisse, dass der Radius der Düsenöffnung 21 bekannt ist, ergibt sich ohne weiteres diejenige Position des Laserschneidkopfs 5 in Y⁺-Richtung, bei welcher die Gasstrahlachse 17 die Vorderkante des Achslagenerfassungselementes 18 erreicht. In Teildarstellung (2) von Fig. 4 ist die Wegstrecke, welche der Laserschneidkopf 5 zwischen dem erstmaligen Auftreffen des Schneidgasstrahls 16 auf das Achslagenerfassungselement 18 und dem Erreichen der Vorderkante des Achslagenerfassungselementes 18 durch die Gasstrahlachse 17 zurücklegen muss, mit "S_{1Y}" bezeichnet.

Bei fortgesetzter Bewegung des Laserschneidkopfs 5 in Y⁺-Richtung nimmt die Überdeckung von Düsenöffnung 21 und Achslagenerfassungselement 18 zu. Damit verbunden ist eine Zunahme der Auslenkung des Achslagenerfassungselementes 18.

Außerdem erreicht im Laufe der Bewegung des Laserschneidkopfs 5 in Y⁺-Richtung auch die Laserstrahlachse 8 die Vorderkante des Achslagenerfassungselementes 18 (Teildarstellung (3) von Fig. 4). Damit verbunden ist ein Anschnitt des Achslagenerfassungselementes 18 durch den Laserschneidstrahl. Der beim Einstechen des Laserschneidstrahls in das Achslagenerfassungselement 18 auftretende Lichtblitz wird.von der Prozesslichtmesseinrichtung 27 erfasst und markiert einen zweiten Zeitpunkt, zu welchem die Position des Laserschneidkopfs 5 in Y⁺-Richtung bestimmt wird. Diese Position des Laserschneidkopfs 5 in Y⁺-Richtung wird mit der Position des Laserschneidkopfs 5 bei erstmaligem Auftreffen des Schneidgasstrahls 16 auf das Achslagenerfassungselement 18 verglichen. In dem gezeigten Beispielsfalls hat der Laserschneidkopf 5 zwischen den beiden genannten Positionen eine Wegstrecke "S_{2Y}" zurückgelegt. Die Wegstrecke S_{2Y} ist um d_{SY} größer als die Wegstrecke S_{1Y}. d_{SY} beschreibt somit den gegenseitigen Versatz von Laserstrahlachse 8 und Gasstrahlachse 17 in Y-Richtung. d_{SY} wird mittels einer hierfür vorgesehenen Auswerteeinrichtung der numerischen Steuerung 15 der Laserschneidmaschine 1 bestimmt.

Der Laserschneidstrahl wird unmittelbar nach dem Einstechen in das Achslagenerfassungselement 18 abgeschaltet. Die Abschaltung des Laserschneidstrahls wird über die numerische Steuerung 15 der Laserschneidmaschine 1 bewirkt, welche die Laserstrahlquelle 9 entsprechend ansteuert.

Wird der Radius bzw. Durchmesser des Schneidgasstrahls 16 entgegen der vorstehenden Prämisse nicht als bekannt vorausgesetzt, so ist das vorstehend beschriebene Verfahren zu modifizieren. Ergänzend wird dann der Durchmesser des Schneidgasstrahls 16 ermittelt.

In diesem Fall werden ebenfalls die Positionen des Laserschneidkopfs 5 bei erstmaligem Auftreffen des Schneidgasstrahls 16 auf das Achslagenerfassungselement 18 (Teildarstellung (2) von Fig. 4) und beim Einstechen des Laserschneidstrahls in das Achslagenerfassungselement 18 (Teildarstellung (3) von Fig. 4) bestimmt. Auch wird in diesem Fall unmittelbar nach dem Einstechen des Laserschneidstrahls in das Achslagenerfassungselement 18 der Laserschneidstrahl ausgeschaltet. Zusätzlich zu den beiden vorstehend genannten Positionen des Laserschneidkopfs 5 wird dann aber auch diejenige Position des Laserschneidkopfs 5 in Y⁺-Richtung bestimmt, bei welcher die Auslenkung des Achslagenerfassungselementes 18 unter der Wirkung des Schneidgasstrahls 16 seinen Maximalwert erreicht. Dieser Maximalwert stellt sich ein, sobald der Schneidgasstrahl 16 im Laufe seiner Bewegung in Y⁺-Richtung mit seinem vollständigen Querschnitt über dem Achslagenerfassungselement 18 zu liegen kommt, sobald also die in Bewegungsrichtung hinten liegende Begrenzung des Schneidgasstrahls 16 die Vorderkante des Achslagenerfassungselementes 18 erreicht (Teildarstellung (4) von Fig. 4). Diejenige Wegstrecke, welche der Laserschneidkopf 5 zwischen dem erstmaligen Auftreffen des Schneidgasstrahls 16 auf das Achslagenerfassungselement 18 und der maximalen Auslenkung des Achslagenerfassungselementes 18 zurückgelegt hat, beschreibt den Durchmesser, d.h. die Abmessung "D" des Schneidgasstrahls 16 in Y-Richtung.

Bei Kongruenz von Laserstrahlachse 8 und Gasstrahlachse 17 hätte demnach der Laserschneidstrahl nach der Wegstrecke 1/2 D seit dem erstmaligen Auftreffen des Schneidgasstrahls 16 auf das Achslagenerfassungselement 18 in das Achslagenerfassungselement 18 einstechen müssen. In dem gezeigten Beispiel war dies jedoch nicht der Fall. Vielmehr wurde von dem Laser-schneidkopf 5 zwischen dem erstmaligen Auftreffen des Schneidgasstrahls 16 auf das Achslagenerfassungselement 18 und dem Einstechen des Laserschneidstrahls in das Achslagenerfassungselement 18 eine Wegstrecke 1/2 D + d_{SY} zurückgelegt. Zu d_{SY} ergibt sich demnach auch bei dem zuletzt beschriebenen, gegenüber dem anfänglich vorgestellten Verfahren abgewandelten Verfahren der Versatz von Laserstrahlachse 8 und Gasstrahlachse 17 in Y-Richtung.

Das modifizierte Verfahren zeichnet sich durch eine besondere Genauigkeit aus. So wird als Basis für die Ermittlung eines etwaigen Versatzes von Laserstrahlachse 8 und Gasstrahlachse 17 die tatsächliche Abmessung des Schneidgasstrahls 16 in Y-Richtung und nicht wie in dem eingangs beschriebenen Verfahren der Durchmesser der Düsenöffnung 21 an der Laserdüse 20 herangezogen. Von dem Durchmesser der Düsenöffnung 21 kann die tatsächliche Abmessung des Schneidgasstrahls 16 beispielsweise infolge einer Verschmutzung der Düsenöffnung 21 abweichen. Ist der Durchmesser der unverschmutzten Düsenöffnung bekannt, kann die beschriebene Messung des Durchmessers des Schneidgasstrahls 16 auch zur Überprüfung des Verschmutzungszustandes der Laserdüse 20 dienen.

In Fällen, in denen der Grad der durch den Schneidgasstrahl 16 bewirkten Auslenkung des Achslagenerfassungselementes 18 nicht mit hinreichender Genauigkeit erfassbar ist, wird zur Bestimmung der Abmessung des Schneidgasstrahls 16 in Y-Richtung das Achslagenerfassungselement 18 mit dem Schneidgasstrahl 16 nicht nur - wie vorstehend beschrieben - in Y⁺-Richtung sondern darüber hinaus auch in Y⁻-Richtung "angetastet".

Wie aus Fig. 5 hervorgeht, wird dabei der Laserschneidkopf 5 mit dem zunächst noch von dem Achslagenerfassungselement 18 entfernten Schneidgasstrahl 16 (Teildarstellung (1) von Fig. 5) und bei abgeschaltetem Laserschneidstrahl in Y⁻-Richtung bewegt, bis der Schneidgasstrahl 16 erstmalig auf das Achslagenerfassungselement 18 auftrifft (Teildarstellung (2) von Fig. 5). Der damit verbundene Beginn der Auslenkung als solche des Achslagenerfassungselementes 18 ist mittels der Abstandsmesseinrichtung 24 in jedem Fall eindeutig feststellbar. Entsprechend eindeutig war zuvor das erstmalige Auftreffen des in Y⁺-Richtung bewegten Schneidgasstrahls 16 bzw. der damit verbundene Beginn der Auslenkung des Achslagenerfassungselementes 18 identifiziert worden (Teildarstellung (2) von Fig. 4).

Sowohl zum Zeitpunkt des Beginns der Auslenkung des Achslagenerfassungselementes 18 durch den in Y⁺-Richtung bewegten Schneidgasstrahl 16 als auch zum Zeitpunkt des Beginns der Auslenkung des Achslagenerfassungselementes 18 durch den in Y⁻-Richtung bewegten Schneidgasstrahl 16 wird die Position des Laserschneidkopfs 5 in Y-Richtung erfasst. Zwischen beiden Schneidkopfpositionen liegt eine Wegstrecke, welche der doppelten Abmessung des Schneidgasstrahls 16 in Y-Richtung zuzüglich der Breite des Achslagenerfassungselementes 18 in Y-Richtung entspricht. Die Breite des Achslagenerfassungselementes 18 sowie die Wegstrecke zwischen den beiden genannten Schneidkopfpositionen sind bekannt, die Abmessung des Schneidgasstrahls 16 in Y-Richtung bzw. der Durchmesser D des Schneidgasstrahls lässt sich folglich berechnen.

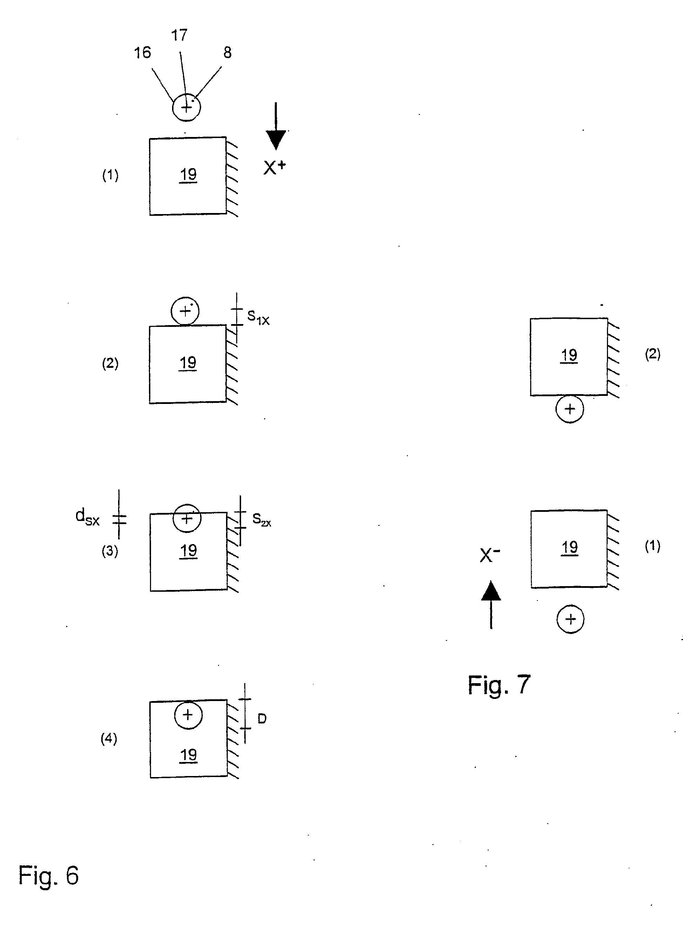

Neben dem Versatz von Laserstrahlachse 8 und Gasstrahlachse 17 in Y-Richtung wird in dem gezeigten Beispielsfall auch der Versatz d_{SX} in X-Richtung ermittelt. Zu diesem Zweck wird der Laserschneidkopf 5 mit dem Laserschneidstrahl und dem Schneidgasstrahl 16 in Richtung der X-Achse über das Achslagenerfassungselement 19 geführt. Im Einzelnen wird dabei wie bei der Ermittlung des Versatzes d_{SY} von Laserstrahlachse 8 und Gasstrahlachse 17 verfahren. Veranschaulicht ist die Ermittlung des Versatzes d_{SX} von Laserstrahlachse 8 und Gasstrahlachse 17 einschließlich der Ermittlung der Abmessung D des Schneidgasstrahls 16 in Richtung der X-Achse in den Fign. 6 und 7.

Anhand des in Y-Richtung sowie des in X-Richtung bestehenden Versatzes von Laserstrahlachse 8 und Gasstrahlachse 17 wird von einer hierfür vorgesehenen Rechnereinheit der numerischen Steuerung 15 ein Korrekturwert generiert. Auf Basis dieses Korrekturwertes wird von der numerischen Steuerung 15 der Laserschneidmaschine 1 der Stellantrieb 26 der Halterung 25 für das fokussierende optische Element 13 angesteuert. Die Halterung 15 wird gemeinsam mit dem fokussierenden optischen Element 13 in der von der X-Achse sowie der Y-Achse aufgespannten Ebene in eine Position eingestellt, bei deren Einnahme das fokussierende optische Element 13 den Laserschneidstrahl koaxial mit dem Schneidgasstrahl 16 auf das Blech 6 richtet.

## Patentansprüche

1. Verfahren zur Ermittlung der gegenseitigen Lage einer Laserstrahlachse (8) eines Laserbearbeitungsstrahls einerseits und einer Gasstrahlachse (17) eines Prozessgasstrahls (16) andererseits an einer Laserbearbeitungsmaschine (1) zum Bearbeiten von Werkstücken, wobei ein Achslagenerfassungsstrahl mit einer gegenüber der Gasstrahlachse (17) definiert angeordneten Strahlachse und ein Achslagenerfassungselement (18, 19) relativ zueinander mit einer Achslagenerfassungsbewegung in Strahlachsquerrichtung bewegt werden und wobei ein in definierter räumlicher Zuordnung zu der Strahlachse stehendes Referenzelement (5) für die Gasstrahlachse (17) mit der Achslagenerfassungsbewegung gekoppelt bewegt wird, **dadurch gekennzeichnet, dass** einerseits ein erster Achslagenerfassungsstrahl mit einer gegenüber der Laserstrahlachse (8) definiert angeordneten ersten Strahlachse und als zweiter Achslagenerfassungsstrahl der Achslagenerfassungsstrahl mit der gegenüber der Gasstrahlachse (17) definiert angeordneten Strahlachse (zweite Strahlachse) und andererseits das Achslagenerfassungselement (18, 19) relativ zueinander mit einer Achslagenerfassungsbewegung in Strahlachsquerrichtung bewegt werden, dass ein in definierter räumlicher Zuordnung zu der ersten Strahlachse stehendes Referenzelement (5) für die Laserstrahlachse (8) und das Referenzelement (5) für die Gasstrahlachse (17) und/oder ein in definierter räumlicher Zuordnung zu dem Achslagenerfassungselement (18, 19) stehendes Referenzelement für das Achslagenerfassungselement (18, 19) mit der Achslagenerfassungsbewegung gekoppelt bewegt werden und dass Ist-Positionen des Referenzelementes (5) für die Laserstrahlachse (8) und des Referenzelementes (5) für die Gasstrahlachse (17) und/oder des Referenzelementes für das Achslagenerfassungselement (18, 19), die ein und derselben Relativlage von erster Strahlachse und Achslagenerfassungselement (18, 19) sowie von zweiter Strahlachse und Achslagenerfassungselement (18, 19) zugeordnet sind, verglichen werden mit Sollpositionen des Referenzelementes (5) für die Laserstrahlachse (8) und des Referenzelementes (5) für die Gasstrahlachse (17) und/oder des Referenzelementes für das Achslagenerfassungselement (18, 19) bei gegenseitiger Solllage von Laserstrahlachse (8) und Gasstrahlachse (17).

2. Verfahren nach Anspruch 1, **dadurch gekennzeichnet, dass** einerseits als erster Achslagenerfassungsstrahl ein Laserstrahl mit der Laserstrahlachse (8) und/oder als zweiter Achslagenerfassungsstrahl ein Gasstrahl mit der Gasstrahlachse (17) und andererseits ein Achslagenerfassungselement (18, 19) relativ zueinander mit einer Achslagenerfassungsbewegung in Strahlachsquerrichtung bewegt werden.

3. Verfahren nach einem der vorhergehenden Ansprüche, **dadurch gekennzeichnet, dass** ein gemeinschaftliches Referenzelement (5) für die Laserstrahlachse (8) und die Gasstrahlachse (17) mit der Achslagenerfassungsbewegung gekoppelt bewegt wird und dass Positionen des gemeinschaftlichen Referenzelementes (5) für die Laserstrahlachse (8) und die Gasstrahlachse (17), die ein und derselben Relativlage von erster Strahlachse und Achslagenerfassungselement (18, 19) sowie von zweiter Strahlachse und Achslagenerfassungselement (18, 19) zugeordnet sind, verglichen werden mit Sollpositionen des gemeinschaftlichen Referenzelementes (5) für die Laserstrahlachse (8) und die Gasstrahlachse (17) bei gegenseitiger Solllage von Laserstrahlachse (8) und Gasstrahlachse (17).

4. Verfahren nach einem der vorhergehenden Ansprüche, **dadurch gekennzeichnet, dass** ein gemeinschaftliches Referenzelement (5) für die Laserstrahlachse (8) und die Gasstrahlachse (17) mit der Achslagenerfassungsbewegung gekoppelt bewegt wird und dass überprüft wird, ob ein und derselben Relativlage von erster Strahlachse und Achslagenerfassungselement (18, 19) sowie von zweiter Strahlachse und Achslagenerfassungselement (18, 19) ein und dieselbe Position des gemeinschaftlichen Referenzelementes (5) für die Laserstrahlachse (8) und die Gasstrahlachse (17) zugeordnet ist.

5. Verfahren nach einem der vorhergehenden Ansprüche, **dadurch gekennzeichnet, dass** Ist-Positionen des Referenzelementes (5) für die Laserstrahlachse (8) und des Referenzelementes (5) für die Gasstrahlachse (17) und/oder des Referenzelementes für das Achslagenerfassungselement (18, 19), welche dem erstmaligen Auftreffen der ersten Strahlachse auf das Achslagenerfassungselement (18, 19) sowie der zweiten Strahlachse auf das Achslagenerfassungselement (18, 19) zugeordnet sind, verglichen werden mit den Sollpositionen des Referenzelementes (5) für die Laserstrahlachse (8) und des Referenzelementes (5) für die Gasstrahlachse (17) und/oder des Referenzelementes für das Achslagenerfassungselement (18, 19) bei gegenseitiger Solllage von Laserstrahlachse (8) und Gasstrahlachse (17).

6. Verfahren nach einem der vorhergehenden Ansprüche, **dadurch gekennzeichnet, dass** als Achslagenerfassungselement (18, 19) ein schneidbares, insbesondere ein laserschneidbares Achslagen-erfassungselement (18, 19) mit einem ersten Achslagenerfassungsstrahl in Form eines Schneid-, insbesondere in Form eines Laserschneidstrahls, beaufschlagt wird und dass das erstmalige Auftreffen, der ersten Strahlachse auf das Achslagenerfassungselement (18, 19) über den Anschnitt des Achslagenerfassungselementes (18, 19) mittels des Schneid-, gegebenenfalls mittels des Laserschneidstrahls, definiert wird.

7. Verfahren nach einem der vorhergehenden Ansprüche, **dadurch gekennzeichnet, dass** der Anschnitt des Achslagenerfassungselementes (18, 19) mittels des Schneid-, gegebenenfalls mittels des Laserschneidstrahls, über die mit dem Anschnitt verbundene Prozesslichtentwicklung erfasst wird.

8. Verfahren nach einem der vorhergehenden Ansprüche, **dadurch gekennzeichnet, dass** als Achslagenerfassungselement (18, 19) ein auslenkbares Achslagenerfassungselement (18, 19) mit einem zweiten Achslagenerfassungsstrahl in Form eines Druckmittel-, insbesondere in Form eines Gasstrahls, beaufschlagt wird, wobei der Druckmittel-, gegebenenfalls der Gasstrahl, in Richtung der Achslagenerfassungsbewegung über das Achslagenerfassungselement (18, 19) bewegt wird und wobei das erstmalige Auftreffen der zweiten Strahlachse auf das Achslagenerfassungselement (18, 19) über die erstmalige Auslenkung des Achslagenerfassungselementes (18, 19) durch den Druckmittel-, gegebenenfalls durch den Gasstrahl, definiert wird.

9. Verfahren nach einem der vorhergehenden Ansprüche, **dadurch gekennzeichnet, dass** die Auslenkung des Achslagenerfassungselementes (18, 19) durch den Druckmittel-, gegebenenfalls durch den Gasstrahl, mittels Abstandsmessung erfasst wird.

10. Verfahren zur Einstellung der gegenseitigen Lage einer Laserstrahlachse (8) eines Laserbearbeitungsstrahls einerseits und einer Gasstrahlachse (17) eines Prozessgasstrahls (16) andererseits an einer Laserbearbeitungsmaschine (1), wobei bei einer Abweichung der gegenseitigen Lage von Laserstrahlachse (8) und Gasstrahlachse (17) von einer gegenseitigen Solllage die Lageabweichung durch Verstellung der Lage der Laserstrahlachse (8) und/ oder durch Verstellung der Lage der Gasstrahlachse (17) korrigiert wird, **dadurch gekennzeichnet, dass** nach dem Verfahren gemäß einem der Patentansprüche 1 bis 9 die gegenseitige Lage der Laserstrahlachse (8) des Laserbearbeitungsstrahls einerseits und der Gasstrahlachse (17) eines Prozessgasstrahls (16) andererseits ermittelt wird und dass bei einer Abweichung der gegenseitigen Lage von Laserstrahlachse (8) und Gasstrahlachse (17) von einer gegenseitigen Solllage eine auf die Lageabweichung abgestimmte Einstellgröße generiert und auf der Grundlage dieser Einstellgröße die Lageabweichung korrigiert wird.

11. Laserbearbeitungsmaschine zum Bearbeiten von Werkstücken (6) mit einem Laserbearbeitungskopf, von welchem aus ein Laserbearbeitungsstrahl mit einer Laserstrahlachse (8) und ein Prozessgasstrahl (16) mit einer Gasstrahlachse (17) auf ein Werkstück (6) richtbar sind sowie mit einer Einrichtung zur Ermittlung der gegenseitigen Lage der Laserstrahlachse (8) einerseits und der Gasstrahlachse (17) andererseits, wobei
- die Einrichtung zur Ermittlung der gegenseitigen Lage von Laserstrahlachse (8) und Gasstrahlachse (17) ein Achslagenerfassungselement (18, 19), ein Referenzelement (5) für die Gasstrahlachse (17) sowie eine Auswerteeinrichtung umfasst,
- ein Achslagenerfassungsstrahl mit einer gegenüber der Gasstrahlachse (17) definiert angeordneten Strahlachse und das Achslagenerfassungselement (18, 19) relativ zueinander mit einer Achslagenerfassungsbewegung in Strahlachsquerrichtung bewegbar sind,
- das Referenzelement (5) für die Gasstrahlachse (17) in definierter räumlicher Zuordnung zu der Strahlachse steht und wobei
- das Referenzelement (5) für die Gasstrahlachse (17) mit der Achslagenerfassungsbewegung gekoppelt bewegbar ist,
**dadurch gekennzeichnet, dass**
- die Einrichtung zur Ermittlung der gegenseitigen Lage von Laserstrahlachse (8) und Gasstrahlachse (17) ein Referenzelement (5) für die Laserstrahlachse (8) und/oder ein Referenzelement für das Achslagenerfassungselement (18, 19) umfasst und dass
- einerseits ein erster Achslagenerfassungsstrahl mit einer gegenüber der Laserstrahlachse (8) definiert angeordneten ersten Strahlachse und als zweiter Achslagenerfassungsstrahl der Achslagenerfassungsstrahl mit der gegenüber der Gasstrahlachse (17) definiert angeordneten Strahlachse (zweite Strahlachse) und andererseits das Achslagenerfassungselement (18, 19) relativ zueinander mit einer Achslagenerfassungsbewegung in Strahlachsquerrichtung bewegbar sind,
- das Referenzelement (5) für die Laserstrahlachse (8) in definierter räumlicher Zuordnung zu der ersten Strahlachse und/oder das Referenzelement für das Achslagenerfassungselement (18, 19) in definierter räumlicher Zuordnung zu dem Achslagenerfassungselement (18, 19) steht,
- das Referenzelement (5) für die Laserstrahlachse (8) und/oder das Referenzelement für das Achslagenerfassungselement (18, 19) mit der Achslagenerfassungsbewegung gekoppelt bewegbar sind,
- mittels der Auswerteeinrichtung Ist-Positionen des Referenzelementes (5) für die Laserstrahlachse (8) und des Referenzelementes (5) für die Gasstrahlachse (17) und/oder des Referenzelementes für das Achslagenerfassungselement (18, 19) erfassbar sind, die ein und derselben Relativlage von erster Strahlachse und Achslagenerfassungselement (18, 19) sowie von zweiter Strahlachse und Achslagenerfassungselement (18, 19) zugeordnet sind und dass
- mittels der Auswerteeinrichtung die erfassten Ist-Positionen mit Sollpositionen des Referenzelementes (5) für die Laserstrahlachse (8) und des Referenzelementes (5) für die Gasstrahlachse (17) und/oder des Referenzelementes für das Achslagenerfassungselement (18, 19) bei gegenseitiger Solllage von Laserstrahlachse (8) und Gasstrahlachse (17) vergleichbar sind.

12. Laserbearbeitungsmaschine nach Anspruch 11, **dadurch gekennzeichnet, dass** als erster Achslagenerfassungsstrahl ein Laserstrahl mit der Laserstrahlachse (8) und/oder als zweiter Achslagenerfassungsstrahl ein Gasstrahl mit der Gasstrahlachse (17) vorgesehen ist.

13. Laserbearbeitungsmaschine nach Anspruch 11 oder 12, **dadurch gekennzeichnet, dass** ein gemeinschaftliches Referenzelement (5) für die Laserstrahlachse (8) sowie die Gasstrahlachse (17) vorgesehen ist und dass mittels der Auswerteeinrichtung Ist-Positionen des gemeinschaftlichen Referenzelementes (5), die ein und derselben Relativlage von erster Strahlachse und Achslagenerfassungselement (18, 19) und von zweiter Strahlachse und Achslagenerfassungselement (18, 19) zugeordnet sind, erfassbar und mit den Soll-Positionen des gemeinschaftlichen Referenzelementes (5) bei gegenseitiger Solllage von Laserstrahlachse (8) und Gasstrahlachse (17) vergleichbar sind.

14. Laserbearbeitungsmaschine nach einem der Ansprüche 11 bis 13, **dadurch gekennzeichnet, dass** als gemeinschaftliches Referenzelement (5) für die Laserstrahlachse (8) und die Gasstrahlachse (17) der Bearbeitungskopf der Laserbearbeitungsmaschine (1) vorgesehen ist.

15. Laserbearbeitungsmaschine nach einem der Ansprüche 11 bis 14, **dadurch gekennzeichnet, dass** mittels der Auswerteeinrichtung überprüfbar ist, ob ein und dieselbe Relativlage von erster Strahlachse und Achslagenerfassungselement (18, 19) sowie von zweiter Strahlachse und Achslagenerfassungselement (18, 19) ein und dieselbe Position des gemeinschaftlichen Referenzelementes (5) für die Laserstrahlachse (8) sowie die Gasstrahlachse (17) zugeordnet ist.

16. Laserbearbeitungsmaschine nach einem der Ansprüche 11 bis 15, **dadurch gekennzeichnet, dass** mittels der Auswerteeinrichtung als Ist-Positionen des Referenzelementes (5) für die Laserstrahlachse (8) und des Referenzelementes (5) für die Gasstrahlachse (17) und/oder des Referenzelementes für das Achslagenerfassungselement (18, 19) die Positionen bei erstmaligem Auftreffen der ersten Strahlachse oder der zweiten Strahlachse auf das Achslagenerfassungselement (18, 19) erfassbar und mit Soll-Positionen vergleichbar sind.

17. Laserbearbeitungsmaschine nach einem der Ansprüche 11 bis 16, **dadurch gekennzeichnet, dass** als erster Achslagenerfassungsstrahl ein Schneidstrahl, insbesondere ein Laserschneidstrahl und als Achslagenerfassungselement (18, 19) ein schneidbares, insbesondere ein laserschneidbares, Achslagenerfassungselement (18, 19) vorgesehen ist und dass das erstmalige Auftreffen der ersten Strahlachse auf das Achslagenerfassungselement (18, 19) über den Anschnitt des Achslagenerfassungselementes (18, 19) mittels des Schneid-, gegebenenfalls mittels des Laserschneidstrahls, definiert ist.

18. Laserbearbeitungsmaschine nach einem der Ansprüche 11 bis 17, **dadurch gekennzeichnet, dass** die Auswerteeinrichtung einen Prozesslichtsensor umfasst, mittels dessen der Anschnitt des Achslagenerfassungselementes (18, 19) durch den Schneid-, gegebenenfalls durch den Laserschneidstrahl, über die mit dem Anschnitt verbundene Prozesslichtentwicklung erfassbar ist.

19. Laserbearbeitungsmaschine nach einem der Ansprüche 11 bis 18, **dadurch gekennzeichnet, dass** als zweiter Achslagenerfassungsstrahl ein Druckmittelstrahl, insbesondere ein Gasstrahl und als Achslagenerfassungselement (18, 19) ein unter der Wirkung des Druckmittel-, gegebenenfalls des Gasstrahls, auslenkbares Achslagenerfassungselement (18, 19) vorgesehen ist, dass der Druckmittel-, gegebenenfalls der Gasstrahl, in Richtung der Achslagenerfassungsbewegung über das Achslagenerfassungselement (18, 19) bewegbar ist und dass das erstmalige Auftreffen der zweiten Strahlachse auf das Achslagenerfassungselement (18, 19) definiert ist über die erstmalige Auslenkung des Achslagenerfassungselementes (18, 19) durch den Druckmittel-, gegebenenfalls durch den Gasstrahl.

20. Laserbearbeitungsmaschine nach einem der Ansprüche 11 bis 19, **dadurch gekennzeichnet, dass** die Auswerteeinrichtung einen Abstandssensor umfasst, mittels dessen die Auslenkung des Achslagenerfassungselementes (18, 19) erfassbar ist.

21. Laserbearbeitungsmaschine nach einem der Ansprüche 11 bis 20, **dadurch gekennzeichnet, dass** die Einrichtung zur Ermittlung der gegenseitigen Lage von Laserstrahlachse (8) und Gasstrahlachse (17) einen Teil einer Einrichtung zur Einstellung der gegenseitigen Lage von Laserstrahlachse (8) und Gasstrahlachse (17) bildet und dass die letztgenannte Einstelleinrichtung zusätzlich eine Rechnereinheit sowie eine Positionssteuerung für die Laserstrahlachse (8) und/oder die Gasstrahlachse (17) umfasst, wobei die Rechnereinheit mit der Einrichtung zur Ermittlung der gegenseitigen Lage von Laserstrahlachse (8) und Gasstrahlachse (17) in Verbindung steht und mittels der Rechnereinheit anhand des Ergebnisses des von der letztgenannten Ermittlungseinrichtung durchgeführten Vergleichs von Ist-Positionen und Soll-Positionen des Referenzelementes (5) für die Laserstrahlachse (8) und des Referenzelementes (5) für die Gasstrahlachse (17) und/oder des Referenzelementes für das Achslagenerfassungselement (18, 19) bei Abweichung der Ist- von den Soll-Positionen eine Einstellgröße für die Positionssteuerung für die Laserstrahlachse (8) und/oder die Gasstrahlachse (17) generierbar ist und dass die Positionssteuerung der Laserstrahlachse (8) und/oder der Gasstrahlachse (17) auf der Grundlage dieser Einstellgröße in einem die gegenseitige Ist-Lage von Laserstrahlachse (8) und Gasstrahlachse (17) in die gegenseitige Solllage überführenden Sinne ansteuerbar ist.

## Claims

1. Method for determining the mutual position of a laser beam axis (8) of a laser machining beam on the one hand and a gas jet axis (17) of a process gas jet (16) on the other hand on a laser machine tool (1) for machining workpieces wherein an axial position detection beam having a beam axis arranged in defined manner with respect to the gas jet axis (17) and an axial position detection element (18, 19) are movable relative to one another with an axial position detection movement in a direction transverse to the beam axis and wherein a reference element (5) for the gas jet axis (17) located in a defined spatial association with respect to the beam axis undergoes coupled movement with the axial position detection movement, **characterized in that** on the one hand a first axial position detection beam having a beam axis which is arranged in defined manner with respect to the laser beam axis (8) and as a second axial position detection beam the axial position detection beam whose beam axis (second beam axis) is arranged in defined manner with respect to the gas jet axis (17) and on the other hand the axial position detection element (18, 19) are moved relative to one another with an axial position detection movement in a direction transverse to the beam axis, **in that** a reference element (5) for the laser beam axis (8), said reference element (5) located in a defined spatial association with respect to the first beam axis and the reference element (5) for the gas jet axis (17) and/or a reference element for the axial position detection element (18, 19), said reference element located in a defined spatial association with respect to the axial position detection element (18, 19) undergo coupled movement with the axial position detection movement and **in that** actual positions of the reference element (5) for the laser beam axis (8) and of the reference element (5) for the gas jet axis (17) and/or of the reference element for the axial position detection element (18, 19), which are associated with one and the same relative position of the first beam axis and the axial position detection element (18, 19) and of the second beam axis and the axial position detection element (18, 19), are compared with desired positions of the reference element (5) for the laser beam axis (8) and of the reference element (5) for the gas jet axis (17) and/or of the reference element for the axial position detection element (18, 19) with the laser beam axis (8) and the gas jet axis (17) in a mutual desired position.

2. Method according to claim 1, **characterised in that** one the one hand as the first axial position detection beam a laser beam having the laser beam axis (8) and/or as the second axial position detection beam a gas jet having the gas jet axis (17) and on the other hand an axial position detection element (18, 19) are moved relative to one another with an axial position detection movement in a direction transverse to the beam axis.

3. Method according to one of the preceding claims, **characterised in that** a common reference element (5) for the laser beam axis (8) and the gas jet axis (17) undergoes coupled movement with the axial position detection movement, and **in that** positions of the common reference element (5) for the laser beam axis (8) and the gas jet axis (17), which are associated with one and the same relative position of the first beam axis and the axial position detection element (18, 19) and of the second beam axis and the axial position detection element (18, 19), are compared with desired positions of the common reference element (5) for the laser beam axis (8) and the gas jet axis (17) with the laser beam axis (8) and the gas jet axis (17) in a mutual desired position.

4. Method according to any one of the preceding claims, **characterised in that** a common reference element (5) for the laser beam axis (8) and the gas jet axis (17) undergoes coupled movement with the axial position detection movement, and **in that** a check is made whether one and the same relative position of the first beam axis and the axial position detection element (18, 19) and of the second beam axis and the axial position detection element (18, 19) is associated with one and the same position of the common reference element (5) for the laser beam axis (8) and the gas jet axis (17).

5. Method according to any one of the preceding claims, **characterised in that** actual positions of the reference element (5) for the laser beam axis (8) and of the reference element (5) for the gas jet axis (17) and/or of the reference element for the axial position detection element (18, 19), which are associated with the very first impingement of the first beam axis on the axial position detection element (18, 19) and of the second beam axis on the axial position detection element (18, 19), are compared with the desired positions of the reference element (5) for the laser beam axis (8) and of the reference element (5) for the gas jet axis (17) and/or of the reference element (5) for the axial position detection element (18, 19) with the laser beam axis (8) and the gas jet axis (17) in a mutual desired position.

6. Method according to any one of the preceding claims, **characterised in that**, as the axial position detection element (18, 19), a cuttable, especially a laser-cuttable, axial position detection element (18, 19) is subjected to the action of a first axial position detection beam in the form of a cutting beam, especially in the form of laser cutting beam, and **in that** the very first impingement of the first beam axis on the axial position detection element (18, 19) is defined by way of the first cut of the axial position detection element (18, 19) by means of the cutting beam, if applicable by means of the laser cutting beam.

7. Method according to any one of the preceding claims, **characterised in that** the first cut of the axial position detection element (18, 19) by means of the cutting beam, if applicable, by means of the laser cutting beam, is detected through the production of process light associated with the first cut.

8. Method according to any one of the preceding claims, **characterised in that**, as the axial position detection element (18, 19), a deflectable axial position detection element (18, 19) is subjected to the action of a second axial position detection beam in the form of a pressure medium jet, especially in the form of a gas jet, wherein the pressure medium jet, if applicable the gas jet, is moved in the direction of the axial position detection movement over the axial position detection element (18, 19) and wherein the first impingement of the second beam axis on the axial position detection element (18, 19) is defined by way of the very first deflection of the axial position detection element (18, 19) by the pressure medium jet, if applicable by the gas jet.

9. Method according to any one of the preceding claims, **characterised in that** the deflection of the axial position detection element (18, 19) by the pressure medium jet, if applicable by the gas jet, is detected by means of distance measurement.

10. Method for adjusting the mutual position of a laser beam axis (8) of a laser machining beam on the one hand and a gas jet axis (17) of a process gas jet (16) on the other hand on a laser machine tool (1), wherein upon a variation of the mutual position of the laser beam axis (8) and the gas jet axis (17) from a desired mutual position, the positional variation is corrected by adjusting the position of the laser beam axis (8) and/or by adjusting the position of the gas jet axis (17) **characterized in that** in accordance with the method according to any one of claims 1 to 9 the mutual position of the laser beam axis (8) of the laser machining beam on the one hand an the gas jet axis (17) of a process gas jet (16) on the other hand is determined and **in that** upon a variation of the mutual position of the laser beam axis (8) and the gas jet axis (17) from the desired mutual position, an adjustment value corresponding to the positional variation is generated and on the basis of the adjustment value the positional variation is corrected.

11. Laser processing machine for machining workpieces (6), having a laser machining head (5), from which a laser machining beam having a laser beam axis (8) and a process gas jet (16) having a gas jet axis (17) are directable onto a workpiece (6), and having a device for determining the mutual position of the laser beam axis (8) on the one hand and the gas jet axis (17) on the other hand, wherein
- the device for determining the mutual position of the laser beam axis (8) and the gas jet axis (17) comprises an axial position detection element (18, 19), a reference element (5) for the gas jet axis (17) and an evaluating device,
- an axial position detection beam having a beam axis arranged in defined manner with respect to the gas jet axis (17) and the axial position detection element (18, 19) are movable relative to one another with an axial position detection movement in a direction transverse to the beam axis,
- the reference element (5) for the gas jet axis (17) is in a defined spatial association with respect to the beam axis and
- the reference element (5) for the gas jet axis (17) undergoes coupled movement with the axial position detection movement,
**characterized in that**
- the device for determining the mutual position of the laser beam axis (8) and the gas jet axis (17) comprises a reference element (5) for the laser beam axis (8) and/or a reference element for the axial position detection element (18, 19),
- on the one hand a first axial position detection beam having a first beam axis arranged in defined manner with respect to the laser beam axis (8) and as a second axial position detection beam the axial position detection beam whose beam axis (second beam axis) is arranged in defined manner with respect to the gas jet axis (17) and on the other hand the axial position detection element (18, 19) are moveable relative to one another with an axial position detection movement in a direction transverse to the beam axis,
- the reference element (5) for the laser beam axis (8) is in a defined spatial association with respect to the first beam axis and/or the reference element for the axial position detection element (18, 19) is in a defined spatial association with respect to the axial position detection element (18, 19),
- the reference element (5) for the laser beam axis (8) and/or the reference element for the axial position detection element (18, 19) are arranged to undergo coupled movement with the axial position detection movement,
- by means of the evaluating device actual positions of the reference element (5) for the laser beam axis (8) and of the reference element (5) for the gas jet axis (17) and/or of the reference element for the axial position detection element (18, 19) are detectable, which are associated with one and the same relative position of the first beam axis and the axial position detection element (18, 19) and of the second beam axis and the axial position detection element (18, 19), and wherein
- by means of the evaluating device the detected actual positions are comparable with desired positions of the reference element (5) for the laser beam axis (8) and of the reference element (5) for the gas jet axis (17) and/or of the reference element for the axial position detection element (18, 19) with the laser beam axis (8) and the gas jet axis (17) in a desired mutual position.

12. Laser machine tool according to claim 11, **characterised in that** a laser beam having the laser beam axis (8) is provided as the first axial position detection beam and/or a gas jet having the gas jet axis (17) is provided as the second axial position detection beam.

13. Laser machine tool according to claim 11 or 12, **characterised in that** a common reference element (5) is provided for the laser beam axis (8) and the gas jet axis (17), and **in that** by means of the evaluating device actual positions of the common reference element (5), which are associated with one and the same relative position of the first beam axis and the axial position detection element (18, 19) and of the second beam axis and the axial position detection element (18, 19) are detectable and are comparable with the desired positions of the common reference element (5) with the laser beam axis (8) and the gas jet axis (17) in a mutual desired position.

14. Laser machine tool according to any one of claims 11 to 13, **characterised in that** the machining head of the laser machine tool (1) is provided as the common reference element (5) for the laser beam axis (8) and the gas jet axis (17).

15. Laser machine tool according to any one of claims 11 to 14, **characterised in that** by means of the evaluating device it is possible to verify whether one and the same relative position of the first beam axis and the axial position detection element (18, 19) and of the second beam axis and the axial position detection element (18, 19) is associated with one and the same position of the common reference element (5) for the laser beam axis (8) and the gas jet axis (17).

16. Laser machine tool according to any one of claims 11 to 15, **characterised in that**, as the actual positions of the reference element (5) for the laser beam axis (8) and of the reference element (5) for the gas jet axis (17) and/or of the reference element for the axial position detection element (18, 19), the positions on very first impingement of the first beam axis or of the second beam axis on the axial position detection element (18, 19) are detectable and comparable with desired positions by means of the evaluating device.

17. Laser machine tool according to any one of claims 11 to 16, **characterised in that** a cutting beam, especially a laser cutting beam, is provided as the first axial position detection beam and a cuttable, especially a laser cuttable, axial position detection element (18, 19) is provided as the axial position detection element (18, 19), and **in that** the very first impingement of the first beam axis on the axial position detection element (18, 19) is defined by way of the first cut of the axial position detection element (18, 19) by means of the cutting beam, if applicable by means of the laser cutting beam.

18. Laser machine tool according to any one of claims 11 to 17, **characterised in that** the evaluating device comprises a process light sensor, by means of which the first cut of the axial position detection element (18, 19) by the cutting beam, if applicable by the laser cutting beam, is detectable through the production of process light associated with the first cut.

19. Laser machine tool according to any one of claims 11 to 18, **characterised in that** a pressure medium jet, especially a gas jet, is provided as the second axial position detection beam and an axial position detection element (18, 19) deflectable under the action of the pressure medium jet, if applicable the gas jet, is provided as the axial position detection element (18, 19), **in that** the pressure medium jet, if applicable the gas jet, is movable in the direction of the axial position detection movement over the axial position detection element (18, 19), and **in that** the very first impingement of the second beam axis on the axial position detection element (18, 19) is defined by way of the very first deflection of the axial position detection element (18, 19) by the pressure medium jet, if applicable by the gas jet.

20. Laser machine tool according to any one of claims 11 to 19, **characterised in that** the evaluating device comprises a distance sensor, by means of which the deflection of the axial position detection element (18, 19) is detectable.

21. Laser machine tool according to any one of claims 11 to 20, **characterised in that** the device for determining the mutual position of the laser beam axis (8) and the gas jet axis (17) forms part of a device for adjusting the mutual position of the laser beam axis (8) and the gas jet axis (17), and **in that** the last-named adjusting device additionally comprises a computer unit and a position control means for the laser beam axis (8) and/or the gas jet axis (17), wherein the computer unit is connected to the device for determining the mutual position of the laser beam axis (8) and the gas jet axis (17) and by means of the computer unit, on the basis of the result of the comparison carried out by the last-named determining device of actual positions and desired positions of the reference element (5) for the laser beam axis (8) and/or of the reference element (5) for the gas jet axis (17) and/or of the reference element for the axial position detection element (18, 19), on variation of the actual from the desired positions an adjusting value for the position control means for the laser beam axis (8) and/or the gas jet axis (17) can be generated, and **in that** the position control means of the laser beam axis (8) and/or of the gas jet axis (17) is controllable based on this adjustment value in the sense of converting the mutual actual position of the laser beam axis (9) and the gas jet axis (17) into the mutual desired position.

## Revendications

1. Procédé pour déterminer la position mutuelle d'un axe de faisceau laser (8) d'un faisceau d'usinage au laser, d'une part, et d'un axe de faisceau de gaz (17) d'un faisceau de gaz de processus (16), d'autre part, sur une machine d'usinage au laser (1) destinée à l'usinage de pièces, dans lequel un faisceau de saisie de position d'axe avec un axe de faisceau disposé de manière définie par rapport à l'axe de faisceau de gaz (17) et un élément de saisie de position d'axe (18, 19) sont déplacés l'un par rapport à l'autre par un déplacement de saisie de position d'axe dans la direction transversale à l'axe de faisceau et dans lequel un élément de référence (5) pour l'axe de faisceau laser (8) se trouvant en association spatiale définie avec l'axe de faisceau est déplacé de manière couplée avec le déplacement de saisie de position d'axe, **caractérisé en ce que**, d'une part, un premier faisceau de saisie de position d'axe avec un premier axe de faisceau disposé de manière définie par rapport à l'axe de faisceau laser (8) et, comme deuxième faisceau de saisie de position d'axe, le faisceau de saisie de position d'axe avec l'axe de faisceau disposé de manière définie par rapport à l'axe de faisceau de gaz (17) (deuxième axe de faisceau) et, d'autre part, l'élément de saisie de position d'axe (18, 19) sont déplacés l'un par rapport à l'autre par un déplacement de saisie de position d'axe dans la direction transversale à l'axe de faisceau, qu'un élément de référence (5) pour l'axe de faisceau laser (8) se trouvant en association spatiale définie avec le premier axe de faisceau et l'élément de référence (5) pour l'axe de faisceau de gaz (17) et/ou un élément de référence pour l'élément de saisie de position d'axe (18, 19) se trouvant en association spatiale définie avec l'élément de saisie de position d'axe (18, 19) sont déplacés de manière couplée avec le déplacement de saisie de position d'axe et que des positions réelles de l'élément de référence (5) pour l'axe de faisceau laser (8) et de l'élément de référence (5) pour l'axe de faisceau de gaz (9) et/ou de l'élément de référence pour l'élément de saisie de position d'axe (18, 19) qui sont associées à une seule et même position relative du premier axe de faisceau et de l'élément de saisie de position d'axe (18, 19) ainsi que du deuxième axe de faisceau et de l'élément de saisie de position d'axe (18, 19) sont comparées avec des positions de consigne de l'élément de référence (5) pour l'axe de faisceau laser (8) et de l'élément de référence (5) pour l'axe de faisceau de gaz (17) et/ou de l'élément de référence pour l'élément de saisie de position d'axe (18, 19) quand l'axe de faisceau laser (8) et l'axe de faisceau de gaz (17) sont en position mutuelle de consigne.

2. Procédé selon la revendication 1, **caractérisé en ce que**, d'une part, comme premier faisceau de saisie de position d'axe un faisceau laser avec l'axe de faisceau laser (8) et/ou comme deuxième faisceau de saisie de position d'axe un faisceau de gaz avec l'axe de faisceau de gaz (17) et, d'autre part, un élément de saisie de position d'axe (18, 19) sont déplacés l'un par rapport à l'autre par un déplacement de saisie de position d'axe dans la direction transversale à l'axe de faisceau.

3. Procédé selon l'une des revendications précédentes, **caractérisé en ce qu'**un élément de référence (5) commun pour l'axe de faisceau laser (8) et l'axe de faisceau de gaz (17) est déplacé de manière couplée avec le déplacement de saisie de position d'axe et que des positions de l'élément de référence (5) commun pour l'axe de faisceau laser (8) et l'axe de faisceau de gaz (17) qui sont associées à une seule et même position relative du premier axe de faisceau et de l'élément de saisie de position d'axe (18, 19) ainsi que du deuxième axe de faisceau et de l'élément de saisie de position d'axe (18, 19) sont comparées avec des positions de consigne de l'élément de référence (5) commun pour l'axe de faisceau laser (8) et l'axe de faisceau de gaz (17) quand l'axe de faisceau laser (8) et l'axe de faisceau de gaz (17) sont en position mutuelle de consigne.

4. Procédé selon l'une des revendications précédentes, **caractérisé en ce qu'**un élément de référence (5) commun pour l'axe de faisceau laser (8) et l'axe de faisceau de gaz (17) est déplacé de manière couplée avec le déplacement de saisie de position d'axe et que l'on vérifie si à une seule et même position relative du premier axe de faisceau et de l'élément de saisie de position d'axe (18, 19) ainsi que du deuxième axe de faisceau et de l'élément de saisie de position d'axe (18, 19) est associée une seule et même position de l'élément de référence (5) commun pour l'axe de faisceau laser (8) et l'axe de faisceau de gaz (17).

5. Procédé selon l'une des revendications précédentes, **caractérisé en ce que** des positions réelles de l'élément de référence (5) pour l'axe de faisceau laser (8) et de l'élément de référence (5) pour l'axe de faisceau de gaz (17) et/ou de l'élément de référence pour l'élément de saisie de position d'axe (18, 19) qui sont associées à la première incidence du premier axe de faisceau sur l'élément de saisie de position d'axe (18, 19) ainsi que du deuxième axe de faisceau sur l'élément de saisie de position d'axe (18, 19) sont comparées avec les positions de consigne de l'élément de référence (5) pour l'axe de faisceau laser (8) et de l'élément de référence (5) pour l'axe de faisceau de gaz (17) et/ou de l'élément de référence pour l'élément de saisie de position d'axe (18, 19) quand l'axe de faisceau laser (8) et l'axe de faisceau de gaz (17) sont en position mutuelle de consigne.

6. Procédé selon l'une des revendications précédentes, **caractérisé en ce que**, comme élément de saisie de position d'axe (18, 19), un élément de saisie de position d'axe (18, 19) pouvant être coupé, en particulier pouvant être coupé au laser, est soumis à un premier faisceau de saisie de position d'axe sous la forme d'un faisceau de coupe, en particulier de coupe au laser et que la première incidence du premier axe de faisceau sur l'élément de saisie de position d'axe (18, 19) est définie par l'entame de l'élément de saisie de position d'axe (18, 19) au moyen du faisceau de coupe, le cas échéant au moyen du faisceau de coupe au laser.

7. Procédé selon l'une des revendications précédentes, **caractérisé en ce que** l'entame de l'élément de saisie de position d'axe (18, 19) au moyen du faisceau de coupe, le cas échéant au moyen du faisceau de coupe au laser, est saisie par la production de lumière de processus liée à l'entame.

8. Procédé selon l'une des revendications précédentes, **caractérisé en ce que**, comme élément de saisie de position d'axe (18, 19), un élément de saisie de position d'axe (18, 19) pouvant être dévié est soumis à un deuxième faisceau de saisie de position d'axe sous la forme d'un faisceau de fluide sous pression, en particulier sous la forme d'un faisceau de gaz, le faisceau de fluide sous pression, le cas échéant le faisceau de gaz, étant déplacé dans la direction du déplacement de saisie de position d'axe à travers l'élément de saisie de position d'axe (18, 19) et la première incidence du deuxième axe de faisceau sur l'élément de saisie de position d'axe (18, 19) étant définie par la première déviation de l'élément de saisie de position d'axe (18, 19) par le faisceau de fluide sous pression, le cas échéant par le faisceau de gaz.

9. Procédé selon l'une des revendications précédentes, **caractérisé en ce que** la déviation de l'élément de saisie de position d'axe (18, 19) par le faisceau de fluide sous pression, le cas échéant par le faisceau de gaz, est saisie au moyen d'une mesure de distance.

10. Procédé pour régler la position mutuelle d'un axe de faisceau laser (8) d'un faisceau d'usinage au laser, d'une part, et d'un axe de faisceau de gaz (17) d'un faisceau de gaz de processus (16), d'autre part, sur une machine d'usinage au laser (1), dans lequel, en cas de divergence de la position mutuelle de l'axe de faisceau laser (8) et de l'axe de faisceau de gaz (17) d'une position mutuelle de consigne, la divergence de position est corrigée par réglage de la position de l'axe de faisceau laser (8) et/ou par réglage de la position de l'axe de faisceau de gaz (17), **caractérisé en ce que**, selon le procédé selon l'une des revendications 1 à 9, la position mutuelle de l'axe de faisceau laser (8) du faisceau d'usinage au laser, d'une part, et de l'axe de faisceau de gaz (17) d'un faisceau de gaz de processus (16), d'autre part, est déterminée et qu'en cas de divergence de la position mutuelle de l'axe de faisceau laser (8) et de l'axe de faisceau de gaz (17) d'une position mutuelle de consigne, une grandeur de réglage adaptée à la divergence de position est générée et la divergence de position est corrigée sur la base de cette grandeur de réglage.

11. Machine d'usinage au laser pour usiner des pièces (6), comprenant une tête d'usinage au laser depuis laquelle un faisceau d'usinage au laser avec un axe de faisceau laser (8) et un faisceau de gaz de processus (16) avec un axe de faisceau de gaz (17) peuvent être dirigés sur une pièce (6) ainsi que comprenant un dispositif pour déterminer la position mutuelle de l'axe de faisceau laser (8), d'une part, et de l'axe de faisceau de gaz (17), d'autre part, dans laquelle
- le dispositif pour déterminer la position mutuelle de l'axe de faisceau laser (8) et de l'axe de faisceau de gaz (17) comprend un élément de saisie de position d'axe (18, 19), un élément de référence (5) pour l'axe de faisceau de gaz (17) ainsi qu'un dispositif d'évaluation,
- un faisceau de saisie de position d'axe avec un axe de faisceau disposé de manière définie par rapport à l'axe de faisceau de gaz (17) et l'élément de saisie de position d'axe (18, 19) sont déplaçables l'un par rapport à l'autre par un déplacement de saisie de position d'axe dans la direction transversale à l'axe de faisceau,
- l'élément de référence (5) pour l'axe de faisceau de gaz (17) se trouve en association spatiale définie avec l'axe de faisceau et
- l'élément de référence (5) pour l'axe de faisceau de gaz (17) est déplaçable de manière couplée avec le déplacement de saisie de position d'axe,
**caractérisé en ce que**
- le dispositif pour déterminer la position mutuelle de l'axe de faisceau laser (8) et de l'axe de faisceau de gaz (17) comprend un élément de référence (5) pour l'axe de faisceau laser (8) et/ou un élément de référence pour l'élément de saisie de position d'axe (18, 19) et que
- d'une part, un premier faisceau de saisie de position d'axe avec un premier axe de faisceau disposé de manière définie par rapport à l'axe de faisceau laser (8) et, comme deuxième faisceau de saisie de position d'axe, le faisceau de saisie de position d'axe avec l'axe de faisceau disposé de manière définie par rapport à l'axe de faisceau de gaz (17) (deuxième axe de faisceau) et, d'autre part, l'élément de saisie de position d'axe (18, 19) sont déplaçables l'un par rapport à l'autre par un déplacement de saisie de position d'axe dans la direction transversale à l'axe de faisceau,
- l'élément de référence (5) pour l'axe de faisceau laser (8) se trouve en association spatiale définie avec le premier axe de faisceau et/ou l'élément de référence pour l'élément de saisie de position d'axe (18, 19) se trouve en association spatiale définie avec l'élément de saisie de position d'axe (18, 19),
- l'élément de référence (5) pour l'axe de faisceau laser (8) et/ou l'élément de référence pour l'élément de saisie de position d'axe (18, 19) sont déplaçables de manière couplée avec le déplacement de saisie de position d'axe,
- au moyen du dispositif d'évaluation, des positions réelles de l'élément de référence (5) pour l'axe de faisceau laser (8) et de l'élément de référence (5) pour l'axe de faisceau de gaz (17) et/ou de l'élément de référence pour l'élément de saisie de position d'axe (18, 19) peuvent être saisies, qui sont associées à une seule et même position relative du premier axe de faisceau et de l'élément de saisie de position d'axe (18, 19) ainsi que du deuxième axe de faisceau et de l'élément de saisie de position d'axe (18, 19) et que
- au moyen du dispositif d'évaluation, les positions réelles saisies sont comparées avec des positions de consigne de l'élément de référence (5) pour l'axe de faisceau laser (8) et de l'élément de référence (5) pour l'axe de faisceau de gaz (17) et/ou de l'élément de référence pour l'élément de saisie de position d'axe (18, 19) quand l'axe de faisceau laser (8) et l'axe de faisceau de gaz (17) sont en position mutuelle de consigne.

12. Machine d'usinage au laser selon la revendication 11, **caractérisée en ce qu'**il est prévu comme premier faisceau de saisie de position d'axe un faisceau laser avec l'axe de faisceau laser (8) et/ou comme deuxième faisceau de saisie de position d'axe un faisceau de gaz avec l'axe de faisceau de gaz (17).

13. Machine d'usinage au laser selon la revendication 11 ou 12, **caractérisée en ce qu'**il est prévu un élément de référence (5) commun pour l'axe de faisceau laser (8) ainsi que l'axe de faisceau de gaz (17) et qu'au moyen du dispositif d'évaluation, des positions réelles de l'élément de référence (5) commun qui sont associées à une seule et même position relative du premier axe de faisceau et de l'élément de saisie de position d'axe (18, 19) et du deuxième axe de faisceau et de l'élément de saisie de position d'axe (18, 19) peuvent être saisies et comparées avec les positions de consigne de l'élément de référence (5) commun quand l'axe de faisceau laser (8) et l'axe de faisceau de gaz (17) sont en position mutuelle de consigne.

14. Machine d'usinage au laser selon l'une des revendications 11 à 13, **caractérisée en ce que** la tête d'usinage de la machine d'usinage au laser (1) est prévue comme élément de référence (5) commun pour l'axe de faisceau laser (8) et l'axe de faisceau de gaz (17).

15. Machine d'usinage au laser selon l'une des revendications 11 à 14, **caractérisée en ce qu'**il est possible, au moyen du dispositif d'évaluation, de vérifier si une seule et même position relative du premier axe de faisceau et de l'élément de saisie de position d'axe (18, 19) ainsi que du deuxième axe de faisceau et de l'élément de saisie de position d'axe (18, 19) est associée à une seule et même position de l'élément de référence (5) commun pour l'axe de faisceau laser (8) ainsi que pour l'axe de faisceau de gaz (17).

16. Machine d'usinage au laser selon l'une des revendications 11 à 15, **caractérisée en ce qu'**il est possible, au moyen du dispositif d'évaluation, de saisir comme positions réelles de l'élément de référence (5) pour l'axe de faisceau laser (8) et de l'élément de référence (5) pour l'axe de faisceau de gaz (17) et/ou de l'élément de référence pour l'élément de saisie de position d'axe (18, 19) les positions lors de la première incidence du premier axe de faisceau ou du deuxième axe de faisceau sur l'élément de saisie de position d'axe (18, 19) et de les comparer avec des positions de consigne.

17. Machine d'usinage au laser selon l'une des revendications 11 à 16, **caractérisée en ce qu'**il est prévu comme premier faisceau de saisie de position d'axe un faisceau de coupe, en particulier un faisceau de coupe au laser, et comme élément de saisie de position d'axe (18, 19) un élément de saisie de position d'axe (18, 19) pouvant être coupé, en particulier pouvant être coupé au laser, et que la première incidence du premier axe de faisceau sur l'élément de saisie de position d'axe (18, 19) est définie par l'entame de l'élément de saisie de position d'axe (18, 19) au moyen du faisceau de coupe, le cas échéant du faisceau de coupe au laser.

18. Machine d'usinage au laser selon l'une des revendications 11 à 17, **caractérisée en ce que** le dispositif d'évaluation comprend un capteur de lumière de processus au moyen duquel l'entame de l'élément de saisie de position d'axe (18, 19) par le faisceau de coupe, le cas échéant le faisceau de coupe au laser, peut être saisie par la production de lumière de processus liée à l'entame.

19. Machine d'usinage au laser selon l'une des revendications 11 à 18, **caractérisée en ce qu'**il est prévu comme deuxième faisceau de saisie de position d'axe un faisceau de fluide sous pression, en particulier un faisceau de gaz, et comme élément de saisie de position d'axe (18, 19) un élément de saisie de position d'axe (18, 19) pouvant être dévié sous l'action du faisceau de fluide sous pression, le cas échéant du faisceau de gaz, que le faisceau de fluide sous pression, le cas échéant le faisceau de gaz, est déplaçable dans la direction du déplacement de saisie de position d'axe à travers l'élément de saisie de position d'axe (18, 19) et que la première incidence du deuxième axe de faisceau sur l'élément de saisie de position d'axe (18, 19) est définie par la première déviation de l'élément de saisie de position d'axe (18, 19) par le faisceau de fluide sous pression, le cas échéant le faisceau de gaz.

20. Machine d'usinage au laser selon l'une des revendications 11 à 19, **caractérisée en ce que** le dispositif d'évaluation comprend un capteur de distance au moyen duquel la déviation de l'élément de saisie de position d'axe (18, 19) peut être saisie.

21. Machine d'usinage au laser selon l'une des revendications 11 à 20, **caractérisée en ce que** le dispositif pour déterminer la position mutuelle de l'axe de faisceau laser (8) et de l'axe de faisceau de gaz (17) forme une partie d'un dispositif pour régler la position mutuelle de l'axe de faisceau laser (8) et de l'axe de faisceau de gaz (17) et que ce dernier dispositif de réglage comprend en plus une unité de calcul ainsi qu'une commande de position pour l'axe de faisceau laser (8) et/ou l'axe de faisceau de gaz (17), l'unité de calcul étant en liaison avec le dispositif pour déterminer la position mutuelle de l'axe de faisceau laser (8) et de l'axe de faisceau de gaz (17) et, au moyen de l'unité de calcul, à partir du résultat de la comparaison, effectuée par ce dernier dispositif de détermination, des positions réelles et des positions de consigne de l'élément de référence (5) pour l'axe de faisceau laser (8) et de l'élément de référence (5) pour l'axe de faisceau de gaz (17) et/ou de l'élément de référence pour l'élément de saisie de position d'axe (18, 19), une grandeur de réglage pour la commande de position pour l'axe de faisceau laser (8) et/ou l'axe de faisceau de gaz (17) pouvant être générée en cas de divergence des positions réelles et des positions de consigne, et que la commande de position de l'axe de faisceau laser (8) et/ou de l'axe de faisceau de gaz (17) peut être commandée sur la base de cette grandeur de réglage dans un sens faisant passer la position mutuelle réelle de l'axe de faisceau laser (8) et de l'axe de faisceau de gaz (17) dans la position mutuelle de consigne.
